# EUROPEAN PATENT APPLICATION

(11) **EP 3 340 437 A1**
(43) Date of publication of application: **27.06.2018**
(21) Application number: 16206762.3
(22) Date of filing: 23.12.2016
(51) Int. Cl.: H02K 3/22, H02K 9/19

(54) **NANOFLUID COOLED ELECTRICAL MACHINE**

(71) Applicant: Siemens Aktiengesellschaft, 80333 München (DE)
(72) Inventor: Banchhor, Vikas Kumar, 122001 Gurgaon (IN)
(74) Representative: Patentanwaltskanzlei WILHELM & BECK

(57) **Abstract**

An electrical machine (100) having a rotor (101), a stator (102), and a fluid bearing means (103) configured for carrying a fluid for cooling the stator (102), is provided. The fluid bearing means (103) carries a nano fluid having nanao particles for example, metal oxides distributed in a base fluid for example, water. The fluid bearing means (103) is rigidly attached to a stator coil (105) of the stator (102) and comprises a fluid manifold (104) having fluid media (106), connected thereto, carrying the nanofluid from the fluid manifold (104) towards the stator coil (105). The nanofluid enhances the heat transfer capacity and therefore allows a decrease in a ratio of the number of the cooling channels (105A) carrying nanofluid to a number of the conductors (105B) carrying current, in the stator coil (105), thereby increasing the current carrying capacity and an overall efficiency of the electrical machine (100).

## Description

The present invention relates to an electrical machine, in particular a generator, having a rotor, a stator, and a fluid bearing means configured for carrying a fluid therewithin for cooling the stator.

Such an electrical machine is known to a person skilled in the art. Such a commonly known electrical machine is, for example, a generator or a motor. Generators such as water cooled large turbo generators typically have a magnetic field of large amplitude generated in and around the stator, that is, a stator core and a stator coil of the stator. Due to presence of this magnetic field, eddy currents are generated in the stator coil and the stator core, in turn generating a large amount of heat therein, which if not removed efficiently, leads to eddy current losses and hot spots being created. Such hot spots cause the generator to be overheated affecting its overall performance.

In order to address the problem of overheating of electrical machines, conventional generators employ cooling systems having fluids such as de-mineralized and de-ionized water as cooling media for removing heat generated inside the stator. Water is typically used due to its high heat carrying capacity as well as easy availability. However, water is known to accelerate corrosion of metal parts due to mineralization and scaling, in any electrical machine. Moreover, such water cooled systems, require deionization of water to be performed, which needs to be carefully controlled in order to avoid possible contamination, as this contamination may decrease resistance of the water being circulated, thereby increasing risk of short circuits in the electrical machines.

Therefore, it is an object of the present invention to provide an electrical machine of the aforementioned kind that reduces overheating of the electrical machines without compromising the operating efficiency of the electrical machines.

The electrical machine disclosed in the present invention achieves the aforementioned object, in that the fluid bearing means carries a nanofluid for cooling the stator of the electrical machine.

According to the present invention, an electrical machine having a rotor, a stator, and a fluid bearing means configured for carrying a fluid therewithin for cooling the stator is provided. The fluid bearing means carries a nanofluid. As used herein, the term "nanofluid" refers to a heat transfer media comprising nano particles distributed in a base fluid. The nano particles distributed in the base fluid have a particle volume concentration ranging from about 0% to about 5% of that of the base fluid. The nano particles comprise metal oxides. Advantageously, the nano particles are selected from a group consisting of copper oxide, aluminium oxide, and any combination thereof. The base fluid is selected from a group consisting of water, ethylene glycol, oil, and any combination thereof. These nano particles which are stably and uniformly distributed in the base fluid enhance an overall thermal conductivity of the nanofluid as compared to other heat transfer media such as water, oil, etc. The enhanced thermal conductivity leads to an increase in the conduction and convection coefficients thereby allowing an increase in the amount of heat transferred per unit quantity of the nanofluid carried by the fluid bearing means. Due to an increase in the heat transfer, the overall performance of the electrical machine is improved in terms of efficiency, for example, each degree of hot spot reduced in a generator, results in an increase in the amount of power generated. Advantageously, the nanofluids remain largely unaffected by changes in the magnetic field and the electric field surrounding the stator in the electrical machine thereby, being a reliable heat transfer media.

The stator of the electrical machine disclosed herein, comprises at least one stator laminated core and at least one stator winding. The stator winding comprises a stator coil. The fluid bearing means is rigidly attached to the stator coil of the stator. The fluid bearing means comprises a fluid manifold and a plurality of fluid media connected thereto and carrying the fluid from the fluid manifold towards the stator coil for cooling the stator. A distal end of each of the fluid media is connected to the stator coil, for example, via an insulation unit. A cross section of the stator coil comprises a plurality of cooling channels for carrying the fluid therewithin and a plurality of conductors for carrying current, generated by the electrical machine, therewithin. A ratio of a number of the cooling channels to a number of the conductors ranges from about 1:5 to about 1:10, for example, for a turbo generator. Advantageously, use of the nanofluid as a heat transfer media enhances the thermal conductivity of the electrical machine, thereby enabling the stator coil to be redesigned by decreasing the number of the cooling channels as compared to the number of conductors, which in turn increases the current carrying capacity of the electrical machine. Thus, lower the ratio of the cooling channels to the conductors, higher is the current carrying capacity and higher is the efficiency of the heat transferred out of the electrical machine.

Moreover, due to high thermal conductivity of the nanofluid, a lesser amount of nanofluid is required for cooling the stator, and therefore lesser amount of external power is required to cool the heated nanofluid in turn for its recirculation in the stator. Thus a decrease in an overall power consumption of a system comprising the electrical machine is achieved. Furthermore, using nanofluid as a heat transfer media decreases costs associated with piping material used for carrying the nanofluid as well as pumping power required to circulate the nanofluid in the electrical machine.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1A: illustrates a sectional elevation view of an active part of a turbo generator as an embodiment of an electrical machine according to the invention, having a rotor, a stator, and fluid bearing means configured for carrying a fluid therewithin for cooling the stator.
- FIG 1B: illustrates an enlarged view of a portion of the turbo generator as an embodiment of an electrical machine according to the invention, marked "A" in FIG. 1A, showing the fluid bearing means.
- FIG 2: illustrates a sectional view of a stator coil of a stator of the turbo generator as an embodiment of an electrical machine according to the invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

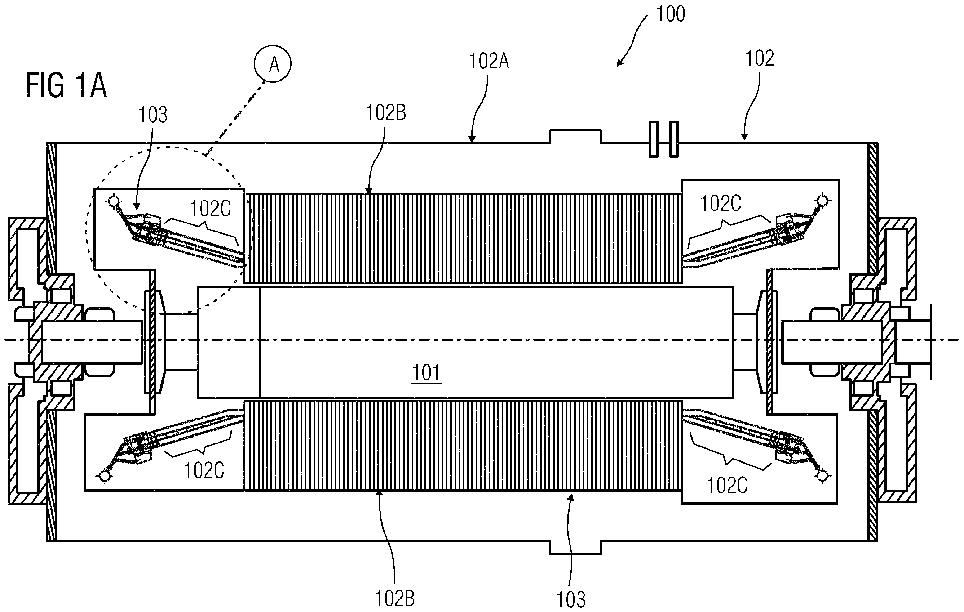

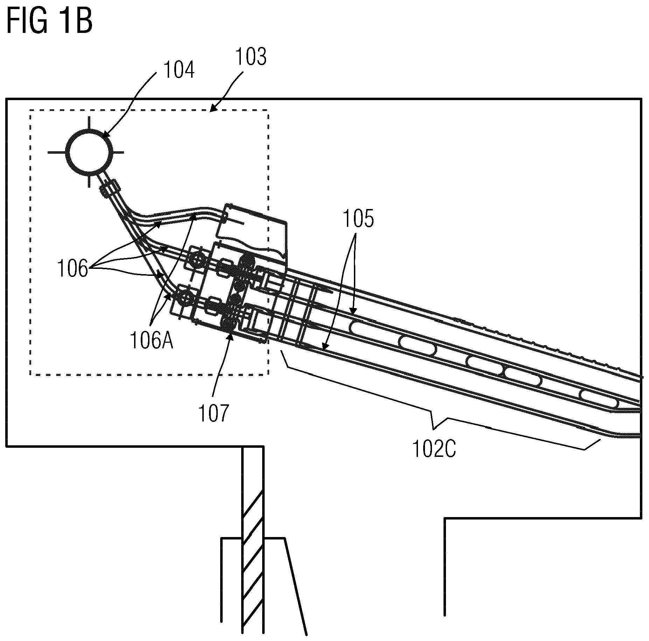

FIG 1A illustrates a sectional elevation view of an active part of a turbo generator as an embodiment of an electrical machine 100, according to the invention, having a rotor 101, a stator 102, and fluid bearing means 103 configured for carrying a fluid therewithin for cooling the stator 102. As illustrated in FIG 1, the stator 102 comprises a stator frame 102A, a stator core 102B partially surrounding the rotor 101, and stator windings 102C. The stator windings 102C are rigidly attached to the stator core 102B. The fluid bearing means 103 is rigidly attached to each of the stator windings 102C. The fluid bearing means 103 carries a nanofluid for cooling the stator 102, that is, the stator windings 102C. The nanofluid is circulated through the stator windings 102C at a predefined pressure using an external fluid pump (not shown).

FIG 1B illustrates an enlarged view of a portion of the turbo generator as an embodiment of an electrical machine 100, according to the invention, marked "A" in FIG. 1A, showing the fluid bearing means 103. The fluid bearing means 103 is rigidly attached to a stator coil 105 of the stator 102, that is, of the stator winding 102C as illustrated in FIG 1B. The fluid bearing means 103 comprises a fluid manifold 104 and a plurality of fluid media 106 connected thereto and carrying the fluid, that is, the nanofluid from the fluid manifold 104 towards the stator coil 105. A distal end 106A of each of the fluid media 106 is connected to the stator coil 105. The nanofluid passes from the fluid manifold 104 through an insulation unit 107 into the stator coil 105, via the fluid media 106. The fluid bearing means 103 carries a nanofluid comprising nano particles distributed in a base fluid. The nano particles are made of metal oxides comprising, for example, copper oxide and/or aluminium oxide. The base fluid comprises water, ethylene glycol, and/or oil such as vacuum pump oil, engine oil, etc. The nano particles distributed in the base fluid have a particle volume concentration ranging from about 0% to about 5% of that of the base fluid. Use of such a nanofluid in the electrical machine 100, for example, a generator or a motor, enables the electrical machine 100 to enhance its overall efficiency due to an increased heat transfer capacity as compared to other fluids used for cooling of the electrical machine 100.

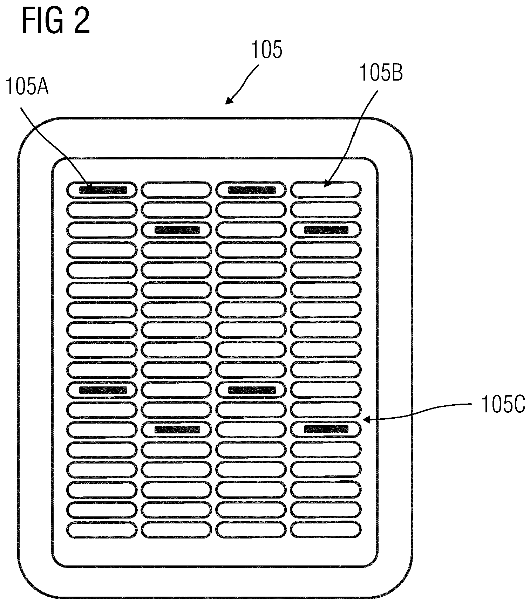

FIG 2 illustrates a sectional view of a stator coil 105 of a stator 102 of the turbo generator as an embodiment of an electrical machine 100, according to the invention. A cross section of said stator coil 105 comprises a plurality of cooling channels 105A for carrying the fluid, that is, the nanofluid therewithin and a plurality of conductors 105B for carrying current, generated by the electrical machine 100, therewithin. The conductors 105B are copper conductors. Due to the enhanced heat transfer capacity by use of nanofluids in the electrical machine 100, a ratio of a number of the cooling channels 105A to a number of the conductors 105B can be reduced to about 1:5 to about 1:10. This decreased ratio of the cooling channels 105A to the conductors 105B in the stator coil 105, allows for a higher number of copper conductors 105B to be accommodated in the stator coil 105, thereby increasing the current carrying capacity per unit space 105C defined inside the stator coil 105.

When using electrically conductive coolant fluids, it is to be ensured that the coolant fluid does not cause a short circuit between electrically conductive components of the stator winding 102C or the stator 102 as well as between the stator 102 and the rotor 101, or any other electrically conductive components of the electrical machine 100. However, corresponding precautions are known to those skilled in the art and therefore will not be explained further in connection with the present description. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

### List of reference numerals:

Electrical machine 100
Rotor 101
Stator 102
Stator frame 102A
Stator core 102B
Stator windings 102C
Fluid bearing means 103
Fluid manifold 104
Stator coil 105
Cooling channels 105A
Conductors 105B
Space 105C
Fluid media 106
Distal end of fluid media 106A
Insulation unit 107

## Claims

1. An electrical machine (100) having
- a rotor (101);
- a stator (102);
- a fluid bearing means (103) configured for carrying a fluid therewithin for cooling the stator (102);
**characterized in that**:
- the fluid bearing means (103) carries a nanofluid.

2. The electrical machine (100) according to claim 1, wherein the fluid bearing means (103) is rigidly attached to a stator coil (105) of the stator (102).

3. The electrical machine (100) according to claim 2, wherein the fluid bearing means (103) comprises a fluid manifold (104) and a plurality of fluid media (106) connected thereto and carrying the fluid from the fluid manifold (104) towards the stator coil (105).

4. The electrical machine (100) according to any one of the claims 1, 2, and 3, wherein a cross section of said stator coil (105) comprises a plurality of cooling channels (105A) for carrying the fluid therewithin and a plurality of conductors (105B) for carrying current, generated by the electrical machine (100), therewithin.

5. The electrical machine (100) according to claim 4, wherein a ratio of a number of the cooling channels (105A) to a number of the conductors (105B) ranges from about 1:5 to about 1:10.

6. The electrical machine (100) according to any one of the previous claims is one of a generator and a motor.

7. The electrical machine (100) according to any one of the previous claims, wherein the nanofluid comprises nano particles distributed in a base fluid.

8. The electrical machine (100) according to any one of the previous claims, wherein the nano particles are selected from a group consisting of copper oxide, aluminium oxide, and any combination thereof.

9. The electrical machine (100) according to any one of the previous claims, wherein the base fluid is selected from a group consisting of water, ethylene glycol, oil, and any combination thereof.

10. The electrical machine (100) according to any one of the previous claims, wherein the nano particles distributed in the base fluid have a particle volume concentration ranging from about 0% to about 5% of that of the base fluid.
